# EUROPEAN PATENT APPLICATION

(11) **EP 3 869 463 A1**
(43) Date of publication of application: **25.08.2021**
(21) Application number: 20164794.8
(22) Date of filing: 23.03.2020
(51) Int. Cl.: G06T 7/579, G06T 7/73

(54) **METHOD AND SYSTEM FOR GATHERING AND DISTRIBUTION OF DATA FOR MOBILE AGENT GLOBAL POSITIONING IN MULTI-AGENT ENVIRONMENT**

(30) Priority: 20.02.2020 US 202016795598
(71) Applicant: Vergendo Ltd., 3096 Limassol (CY)
(72) Inventor: Drozdovskiy, Alexander, 3096 Limassol (CY); Smirnov, Mikhail, 3096 Limassol (CY); Yushkov, Nikolay, 3096 Limassol (CY); Ufnarovskii, Vladimir, 3096 Limassol (CY)
(74) Representative: AWA Sweden AB

(57) **Abstract**

A computerized system for solving the problem of gathering, unification, validating, updating and distribution to mobile agent of a database for use in mobile agent positioning, the system comprising: a client mobile application configured to gather GPS data, receive 3D features and their global poses form a network service based on the GPS data, cache received data; capture camera frames and localize the device relative to an observed 3D environment; and a server comprising a network service and a database, operative coupled to the network service, wherein the network service and the database exchange data comprising key frames, GPS data and 3D features.

## Description

### TECHNICAL FIELD

The disclosed embodiments relate in general to augmented reality (AR) systems and, more specifically, to a method and system for gathering and distribution of data for mobile agent global positioning in multi-agent environment.

### DESCRIPTION OF THE RELATED ART

The augmented and virtual reality (AR/VR) market amounted to a forecast of 18.8 billion U.S. dollars in 2020 and is expected to expand drastically in the coming years. Augmented Reality is likely to present a completely new way of engaging and expanding the abilities of retailers. The possibilities of augmented reality are endless, especially when combined with the ever-evolving wireless technology, which enables the integration of mobile devices and home appliances, in order to provide an enhanced connected experience for the end users. Huge potential opportunities in biotechnology and healthcare are expected to drive the growth of the augmented reality market over the forecast period.

As it is well known in the art, most AR systems utilize mobile agents - namely, a type of devices, with the feature of autonomy, social ability, learning, and most significantly, mobility. Positioning of the mobile agent is the process of determining of the mobile agent's pose relative to the global coordinate system. In one or more embodiments, the pose may comprise the parameters representing the agent's translation and rotation.

As would be appreciated by persons of ordinary skill in the art, positioning of the mobile agents is required for implementing many practical applications including navigation, information geo-targeting, as well as geo-tagging of user data. The application of the specific interest discussed herein is Augmented Reality (AR), however the concepts disclosed in this disclosure are not limited to this application.

As it is well known to persons of ordinary skill in the art, AR processing involves augmenting the imagery (or video) of the real world acquired in real time with artificial visual elements or other relevant information, such as 3D objects, object contours/halos, navigation routes. In one exemplary embodiment of an AR system implementation, textual informational tags may be he interposed, for example, on objects and Points Of Interest (POI).

As would be readily understood by persons of ordinary skill in the art, compared to other applications, AR requires substantially higher accuracy of positioning and especially rotation accuracy because the artificial elements need to be placed over real world scenes with sub-pixel accuracy to sufficiently blend with real-world imagery for acceptable user experience. Such an accuracy requirement corresponds to an angular error of < 0.1 degrees which is 10-100 times smaller than the angular accuracy provided by positioning methods based on GPS and/or sensor data.

On the other hand, to achieve the acceptable level of positioning accuracy described above, the existing positioning solutions rely on combining the techniques of localization and 3D scene matching.

As it is well known to persons of ordinary skill in the art, localization is the process of determining the position of the mobile agent relative to the local landmarks. By itself it is not sufficient for the mobile agent positioning, as the positions of the aforesaid landmarks are unknown. On the other hand, the aforesaid 3D scene matching is the process of establishing correspondence between two 3D scenes. If the global poses of the landmarks in one scene are known this allows the system to match the local poses relative to the scene and to the global pose. To achieve the successful 3D scene matching in every location, a sufficient database of 3D scene description must be provided.

As would be appreciated by persons of ordinary skill in the art, gathering, unification, validating, updating and distribution to a mobile agent of such a database is technically challenging due to one or more of the following problems:
1. The system should be able to operate in case only the geo-data (map) is available;
2. The positioning accuracy should increase with collecting more user data;
3. The data should be gathered in the raw format to prevent data spoofing and maximize system flexibility;
4. The client-server bandwidth should be minimized to operate in low-speed mobile networks; and
5. The system should be able to operate offline for short time.

Therefore, in view of the above and other deficiencies of the conventional positioning systems, new systems and methods are needed for gathering and distribution of data for mobile agent global positioning in multi-agent environment.

### SUMMARY OF THE INVENTION

The embodiments described herein are directed to systems and methods that substantially obviate one or more of the above and other problems associated with the conventional AR positioning solutions.

In accordance with one aspect of the embodiments described herein, there is provided a computerized system for solving the problem of gathering, unification, validating, updating and distribution to mobile agent of a database for use in mobile agent positioning, the system comprising: a client mobile application configured to gather GPS data, receive 3D features and their global poses form a network service based on the GPS data, cache received data; capture camera frames and localize the device relative to an observed 3D environment; and a server comprising a network service and a database, operative coupled to the network service, wherein the network service and the database exchange data comprising key frames, GPS data and 3D features. In one or more embodiments, the client mobile application:
gathers GPS data;
receives 3D features and their global poses form network service based on GPS data;
caches received data;
captures camera frames;
localizes the device relative to observed 3D environment;
extracts 3D features from captured frames;
matches extracted 3D features with reference 3D features;
calculates global device pose based on poses of matched features;
identifies and caches camera key frames;
compresses key frames using information on 3D feature location in frames; and
sends the compressed frames along with GPS data to the network service.

In one or more embodiments, the network service:
receives compressed key frames along with GPS data from mobile clients;
uncompresses key frames;
localizes the client relative to observed 3D environment;
extracts 3D features from key frames;
classifies 3D features to geo-data types;
matches 3D features along with GPS data to geo-data (maps);
matches 3D features along with GPS data and matched geo-data to reference 3D features from the database;
updates the database of reference 3D features and meta-data with user 3D features; and
sends the 3D features from the database to mobile clients based on their current position.

In one or more embodiments, the database stores anonymized key frames along with GPS data and features along with global poses and Geo-data (map) matches.

In one or more embodiments, the client mobile application and the network service perform work sharing in which the positioning is performed completely on the client mobile application, which allows reducing the dependency of quality of service on the network latency.

In one or more embodiments, the client mobile application is further configured to extract 3D features from captured frames, matches extracted 3D features with a set of predetermined reference 3D features, calculate global device pose based on poses of matched features, identify and cache camera key frames, compress key frames using information on 3D feature location in frames and send the compressed frames along with GPS data to the network service.

In accordance with another aspect of the embodiments described herein, a method of network bandwidth reduction between clients and a service is provided comprising: selection of the key frames which maximize difference while preserving the feature matches; and image compression using the information on matched feature location in key frames.

In accordance with yet another aspect of the embodiments described herein, a computer-implemented method is provided for solving the problem of gathering, unification, validating, updating and distribution to mobile agent of a database for use in mobile agent positioning, the method comprising: using a client mobile application configured to gather GPS data, receive 3D features and their global poses form a network service based on the GPS data, cache received data; capture camera frames and localize the device relative to an observed 3D environment; and using a server comprising a network service and a database, operative coupled to the network service, wherein the network service and the database exchange data comprising key frames, GPS data and 3D features.

In one or more embodiments, the client mobile application:
gathers GPS data;
receives 3D features and their global poses form network service based on GPS data;
caches received data;
captures camera frames;
localizes the device relative to observed 3D environment;
extracts 3D features from captured frames;
matches extracted 3D features with reference 3D features;
calculates global device pose based on poses of matched features;
identifies and caches camera key frames;
compresses key frames using information on 3D feature location in frames; and
sends the compressed frames along with GPS data to the network service.

In one or more embodiments, the network service:
receives compressed key frames along with GPS data from mobile clients;
uncompresses key frames;
localizes the client relative to observed 3D environment;
extracts 3D features from key frames;
classifies 3D features to geo-data types;
matches 3D features along with GPS data to geo-data (maps);
matches 3D features along with GPS data and matched geo-data to reference 3D features from the database;
updates the database of reference 3D features and meta-data with user 3D features; and
sends the 3D features from the database to mobile clients based on their current position.

In one or more embodiments, the database stores anonymized key frames along with GPS data and features along with global poses and Geo-data (map) matches.

In one or more embodiments, the client mobile application and the network service perform work sharing in which the positioning is performed completely on the client mobile application, which allows reducing the dependency of quality of service on the network latency.

In one or more embodiments, the client mobile application is further configured to extract 3D features from captured frames, matches extracted 3D features with a set of predetermined reference 3D features, calculate global device pose based on poses of matched features, identify and cache camera key frames, compress key frames using information on 3D feature location in frames and send the compressed frames along with GPS data to the network service.

In accordance with a further aspect of the embodiments described herein, there is provided a tangible computer-readable medium comprising a set of instructions implementing a method for solving the problem of gathering, unification, validating, updating and distribution to mobile agent of a database for use in mobile agent positioning, the method comprising: using a client mobile application configured to gather GPS data, receive 3D features and their global poses form a network service based on the GPS data, cache received data; capture camera frames and localize the device relative to an observed 3D environment; and using a server comprising a network service and a database, operative coupled to the network service, wherein the network service and the database exchange data comprising key frames, GPS data and 3D features.

In one or more embodiments, the client mobile application:
gathers GPS data;
receives 3D features and their global poses form network service based on GPS data;
caches received data;
captures camera frames;
localizes the device relative to observed 3D environment;
extracts 3D features from captured frames;
matches extracted 3D features with reference 3D features;
calculates global device pose based on poses of matched features;
identifies and caches camera key frames;
compresses key frames using information on 3D feature location in frames; and
sends the compressed frames along with GPS data to the network service.

In one or more embodiments, the network service:
receives compressed key frames along with GPS data from mobile clients;
uncompresses key frames;
localizes the client relative to observed 3D environment;
extracts 3D features from key frames;
classifies 3D features to geo-data types;
matches 3D features along with GPS data to geo-data (maps);
matches 3D features along with GPS data and matched geo-data to reference 3D features from the database;
updates the database of reference 3D features and meta-data with user 3D features; and
sends the 3D features from the database to mobile clients based on their current position.

In one or more embodiments, the database stores anonymized key frames along with GPS data and features along with global poses and Geo-data (map) matches.

In one or more embodiments, the client mobile application and the network service perform work sharing in which the positioning is performed completely on the client mobile application, which allows reducing the dependency of quality of service on the network latency.

In one or more embodiments, the client mobile application is further configured to extract 3D features from captured frames, matches extracted 3D features with a set of predetermined reference 3D features, calculate global device pose based on poses of matched features, identify and cache camera key frames, compress key frames using information on 3D feature location in frames and send the compressed frames along with GPS data to the network service.

Additional aspects related to the invention will be set forth in part in the description which follows, and in part will be obvious from the description, or may be learned by practice of the invention. Aspects of the invention may be realized and attained by means of the elements and combinations of various elements and aspects particularly pointed out in the following detailed description and the appended claims.

It is to be understood that both the foregoing and the following descriptions are exemplary and explanatory only and are not intended to limit the claimed invention or application thereof in any manner whatsoever.

### BRIEF DESCRIPTION OF THE DRAWINGS

The accompanying drawings, which are incorporated in and constitute a part of this specification exemplify the embodiments of the present invention and, together with the description, serve to explain and illustrate principles of the inventive technique. Specifically:
Figure 1 illustrates an exemplary embodiment of a system for solving the problem of gathering, unification, validating, updating and distribution to mobile agent(s) of a database for use in mobile agent positioning.
Figure 2 illustrates an exemplary embodiment of an operating sequence of a client portion of the system for solving the problem of gathering, unification, validating, updating and distribution to mobile agent(s) of a database for use in mobile agent positioning.
Figure 3 illustrates an exemplary embodiment of an operating sequence of a server portion of the system for solving the problem of gathering, unification, validating, updating and distribution to mobile agent(s) of a database for use in mobile agent positioning.

### DETAILED DESCRIPTION

In the following detailed description, reference will be made to the accompanying drawing(s), in which identical functional elements are designated with like numerals. The aforementioned accompanying drawings show by way of illustration, and not by way of limitation, specific embodiments and implementations consistent with principles of the present invention. These implementations are described in sufficient detail to enable those skilled in the art to practice the invention and it is to be understood that other implementations may be utilized and that structural changes and/or substitutions of various elements may be made without departing from the scope and spirit of present invention. The following detailed description is, therefore, not to be construed in a limited sense. Additionally, the various embodiments of the invention as described may be implemented in the form of a software running on a general purpose computer, in the form of a specialized hardware, or combination of software and hardware.

The concept of electronic device in the form of glasses providing AR function with textual tags on objects was first proposed in 1901 novel by L. Frank Baum, author of The Wonderful Wizard of Oz, which was entitled The Master Key: An Electrical Fairy Tale, Founded Upon the Mysteries of Electricity and the Optimism of Its Devotees. On the other hand, usage of in-place tags for navigating in virtual 3D environment was first demonstrated in a video game System Shock released in 1994. Using geo-located object tags for navigation in AR was first demonstrated in 2009 as an experimental feature in Yelp application for iOS, which is well known to persons of ordinary skill in the art.

As it is well known to persons of ordinary skill in the art, the placement of geo-located object tags or routers in AR relies on the precise positioning of the camera of the mobile agent. The problem of mobile agent positioning has been well studied during the past 30 years.

It is well known that accurate positioning requires both the local environment sensing as well as localization using sensors, as the sole data from sensors such as GPS, gyroscopes, accelerometers, magnetometers, etc. are not enough to solve the positioning problem, as described, for example, J. J. Leonard and H. F. Durrant-Whyte, "Simultaneous map building and localization for an autonomous mobile robot," Proceedings IROS '91:IEEE/RSJ International Workshop on Intelligent Robots and Systems '91, Osaka, Japan, 1991, pp. 1442-1447 vol.3. doi: 10.1109/IROS.1991.174711. The methods of localizing the agent relative to local landmarks with inaccurate/unknown positions are known in literature as Simultaneous Localization And Mapping (SLAM). The first publications on this topic appeared no later than 1991. While there are many scientific publications and patent documents on the topic of SLAM, it is not claimed to be a part of the herein disclosed invention.

As would be appreciated by persons of ordinary skill in the art, the localization by itself does not solve the problem of positioning as the global poses of the landmarks are unknown. Therefore, the second step is matching the landmarks to the reference data to get their global poses. This topic is also well studied in the existing literature, see, for example, Hana, Xian-Feng, et al. "A comprehensive review of 3D point cloud descriptors." arXiv preprint arXiv:1802.02297 (2018). The first publications on this topic were published in 1998, see, for example, Carmichael, Owen, and Martial Hebert. "Unconstrained registration of large 3D point sets for complex model building." Proceedings. 1998 IEEE/RSJ International Conference on Intelligent Robots and Systems. Innovations in Theory, Practice and Applications (Cat. No. 98CH36190). Vol. 1. IEEE, 1998. While there are many scientific articles and patent documents on the topic of 3D scene landmark matching, it is not claimed to be a part of the disclosed invention.

The client-server systems for visual agent positioning are presented in United States patent US9240074B2 by Rafael Advanced Defense Systems Ltd (2010) in which all the data processing is performed on the server side and United States patent US9699375B2 by Nokia (2013), which focuses on the client side processing only. Both of the aforesaid United States patents are incorporated by reference herein in their entirety, as if fully set forth herein. However, the aforesaid two patents do not describe solutions for the stated problem.

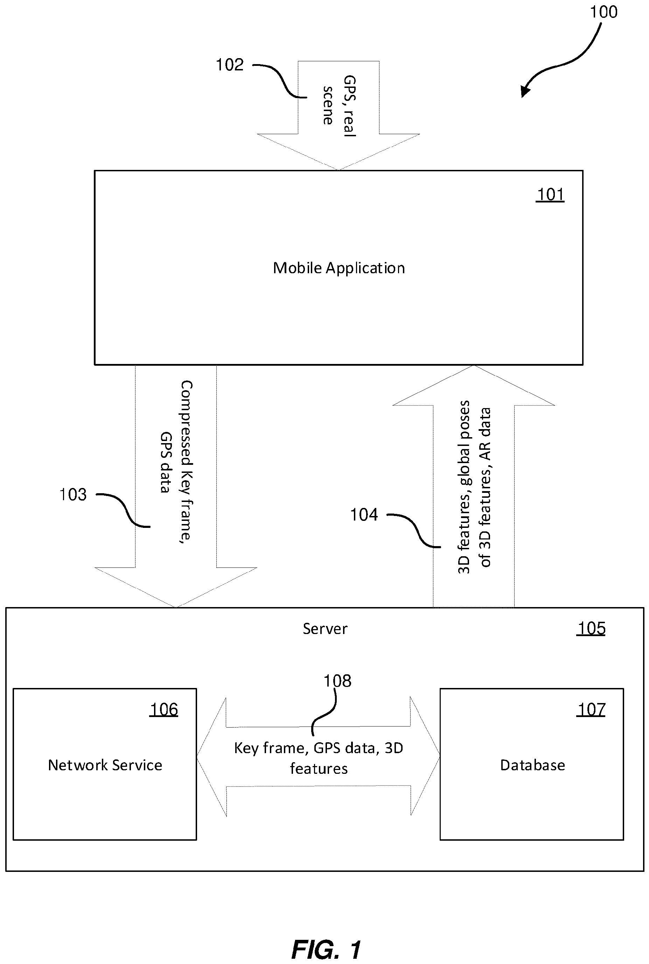

Therefore, in according with one aspect of the embodiments described herein, there is provided a system and method for solving the problem of gathering, unification, validating, updating and distribution to mobile agent(s) of a database for use in mobile agent positioning. An exemplary embodiment of this system 100 is illustrated in Figure 1.

In one or more embodiments, the described system comprises one or more of the below-described components. In one embodiment, the described system 100 for solving the problem of gathering, unification, validating, updating and distribution to mobile agent(s) of a database for use in mobile agent positioning shown in Figure 1 incorporates a client mobile application 101 which is configured to gather GPS data 102, receive 3D features and their global poses 102 from network service based on GPS data, cache received data; captures camera frames and localizes the device relative to observed 3D environment. In one or more embodiments, the mobile application 101 is an application that is running on any mobile devices, which are clients for the described system 101 shown in Figure 1. In one or more embodiments, the client mobile application 101 is further configured to extract 3D features from captured frames, matches extracted 3D features with a set of predetermined reference 3D features 104, calculate global device pose based on poses of matched features, identify and cache camera key frames, compress key frames using information on 3D feature location in frames and send the compressed frames along with GPS data 103 to the network service.

In one or more embodiments, the described system 100 for solving the problem of gathering, unification, validating, updating and distribution to mobile agent(s) of a database for use in mobile agent positioning shown in Figure 1 further comprises a server 105, which is the main cloud engine that consists of two components: network service 106 and database 107, between which the data 108 is exchanged. The exchanged data 108 includes, without limitation, key frames, GPS data and 3D features.

In one or more embodiments, the network service 106 receives compressed data from clients, uncompresses it, matches it with geo-map data, updates existing 3D cloud and sends the generated update to clients. In one or more embodiments, the network service 106 is further configured to: receive compressed key frames along with GPS data from mobile clients, uncompress key frames, localize the client relative to observed 3D environment, extracts 3D features from key frames, classify 3D features to geo-data types, match 3D features along with GPS data to geo-data (maps), match 3D features along with GPS data and matched geo-data to reference 3D features from the database, update the database of reference 3D features and meta-data with user 3D features, and send the 3D features from the database to mobile clients based on their current position.

On the other hand, in one or more embodiments, the database 107 provides storage to keep GPS data with anonymized key frames. In one or more embodiments, the database 107 also stores 3D features with their global Geo poses.

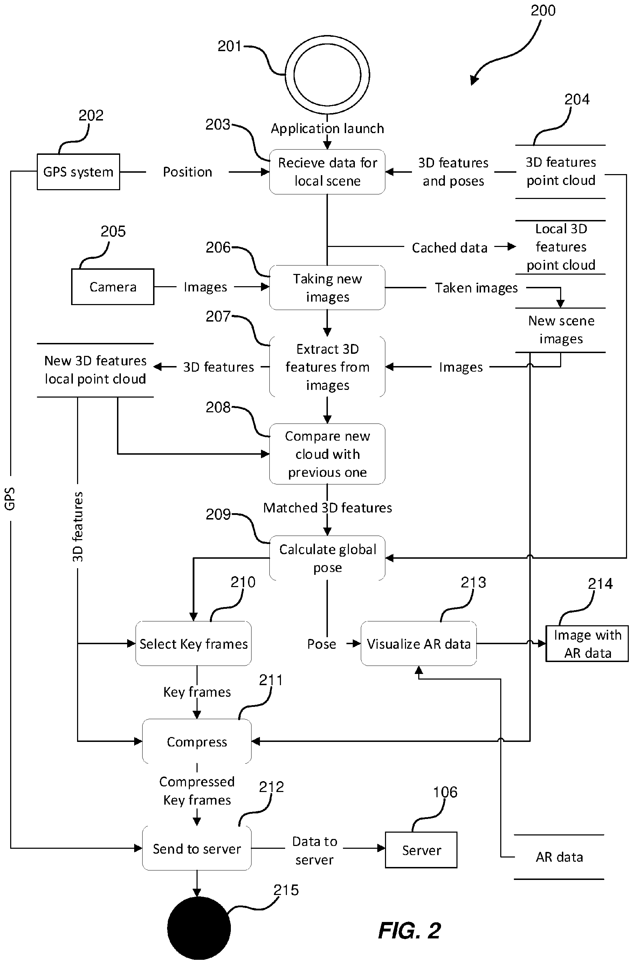

In one or more embodiments, the operating sequence (method) performed by the described system 100 for solving the problem of gathering, unification, validating, updating and distribution to mobile agent(s) of a database for use in mobile agent positioning shown in Figure 1 comprises steps performed by client and server components of the described system. An exemplary embodiment of the client-side operating sequence 200 is shown in Figure 2.

With reference to Figure 2, the embodiment of the operating sequence 200 starts at step 201. The GPS system 202 is a system that delivers GPS signal data with the DOP estimation. At step 203, the system receives data for local scene. According to the GPS data proper 3D features and their global poses of some surrounding of detected GPS position are obtained from the 3D features point cloud 204 on server via server's network service. In none or more embodiments, this data is cached to be faster processed on mobile devices.

In one or more embodiments, the camera 205 is the mobile phone camera that is used as a source device for getting images with automatic shutter control and autofocus with unknown distortion on a mobile device.

In the step 206, taking new images is performed. In one or more embodiments, the images delivery can be done periodically by the camera photo mode or from a video stream, controlled by the application. For each image GPS and orientation data of the device are received.

In step 207, extracting 3D features from images is performed. In this step, the system performs SLAM algorithm to build a local point cloud using images obtained on previous step, internally performs localization of the device relative to the observed local 3D environment, then extracts 3D features from the obtained point cloud.

In step 208, the client system performs comparing new cloud with previous one. In this step, the system matches extracted 3D features from new point cloud, built on previous step 207 with reference 3D features obtained in step 203 by matching their descriptors using well known techniques.

In step 209, the client system calculates global pose. This involves calculating global device pose based on poses of matched features obtained in step 208, defining the relative translation and rotation between received 3D features with their global poses and calculated local poses. In one or more embodiments, this step is implemented by RANSAC approach with automatic detection outliers and inliers matches.

In step 210, the client system selects key frames. Specifically, the system identifies and caches camera key-frames, which has significant difference relative to their neighbor frames. In one embodiment, this is accomplished using the well-known optical-flow approach with significant changes detection. This block uses knowledge about pose defined in the "Calculate global pose" step 209.

In step 213, the client system visualizes AR data. Specifically, the system applies POI AR Tags (received from the AR objects database) to the localized frame, which pose is known in the global system coordinates (pose received from "Calculate global pose" block), that's done with sub-pixel accuracy in real-time. Thus, any AR object that has a global positioning can be processed, AR objects with programmatic behaviour (actors) can be supported as well. As a result, camera images augmented with AR tags are displayed on a screen of a mobile device, see 214.

In step 211, the client system performs compression operation. Specifically, the system compresses obtained before on "Select Key frames" step key-frames using information on 3D feature location in frames; those parts of images, where 3D features have been extracted, are compressed with minimal loss. In one or more embodiments the modified VP9 intra-frame coding is used for key-frames.

In step 212, the system sends the compressed frames to the server. Specifically, the client system sends the compressed frames obtained in the step 211 along with the GPS data to server's network service 106.

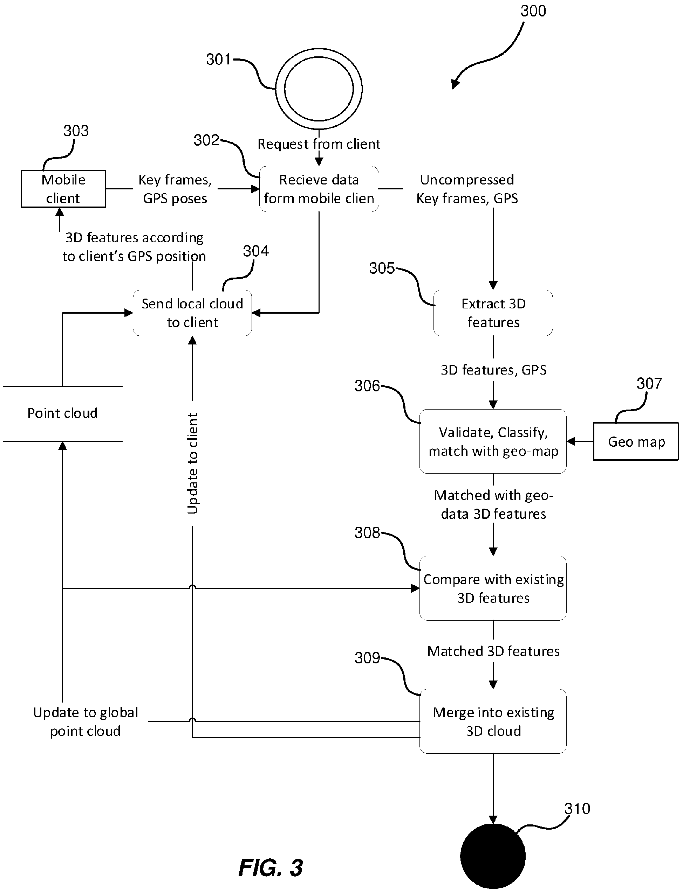

Figure 3 illustrates an exemplary embodiment of an operating sequence 300 a server portion of the system 100 for solving the problem of gathering, unification, validating, updating and distribution to mobile agent(s) of a database for use in mobile agent positioning. The operating sequence starts at step 301.

At step 302, the server system receives data from mobile clients. Specifically, the server side receives compressed key frames along with GPS data from mobile clients 303, and uncompresses them.

The local cloud may be sent to client in step 304.

At step 305, the server system extracts 3D features. Specifically, the server extracts 3D features from received on previous step key frames with their GPS data.

At step 306, the server validates, classifies and performs matching with geo-map. Specifically, the server classifies 3D features from step "Extract 3D features" to geo-data types received from "geo-map" block, matches 3D features along with GPS data to geo-data (maps), received from the "geo-map" component 307.

The geo-map component 307 comprises the data of 3D features with their global poses obtained before and associated with the GPS data as a searching key, which are needed to get actual data of a client 3D environment.

At step 308, the system compares the resulting 3D feature data with existing 3D features. Specifically, the server matches 3D features received from the step 306 along with GPS data and matched geo-data to reference 3D features from the "point cloud" database which contains previously taken and reconstructed scenes.

At step 309, the system merges the result into existing 3D cloud. Specifically, the server updates the database of reference 3D features and meta-data of previously taken and reconstructed scenes with new user 3D features received from last scene from "Compare with existing 3D features" block, and sends the updated 3D features point cloud from the database to mobile clients based on their current position. In addition, the resulting data is stored in the "point cloud" database. The operation terminates in step 310.

In one or more embodiments, the describe system performs work sharing between client and service in which the positioning is performed completely on client which allows reducing the dependency of quality of service on the network latency.

One exemplary embodiment of the described techniques is implemented on a mobile device (phone/smart glasses) with a visual display, camera, GPS, Internet connectivity and an application market. The mobile device would access an AR Mobile on-line application which receives reference data necessary for device positioning, caches received data, captures camera frames, calculates the precise position of the mobile devices, applies POI AR Tags to the camera frames with subpixel accuracy in real-time, displays AR frames on the display mobile device, gathers relevant visual data on the environment along with GPS data and sends the above data to the server through the internet. In addition an internet service may be provided, which receives data from mobile clients, processes client data and produces reference data for device positioning and distributes reference data to connected mobile devices based on their GPS data.

Finally, it should be understood that processes and techniques described herein are not inherently related to any particular apparatus and may be implemented by any suitable combination of components. Further, various types of general purpose devices may be used in accordance with the techniques described herein. It may also prove advantageous to construct specialized apparatus to perform the method steps described herein. The present invention has been described in relation to particular examples, which are intended in all respects to be illustrative rather than restrictive. Those skilled in the art will appreciate that many different combinations of hardware, software, and firmware will be suitable for practicing the present invention. For example, the described software may be implemented in a wide variety of programming or scripting languages, such as Assembler, C/C++, Objective-C, Python, Java, JavaScript as well as any now known or later developed programming or scripting language.

Moreover, other implementations of the invention will be apparent to those skilled in the art from consideration of the specification and practice of the invention disclosed herein. Various aspects and/or components of the described embodiments may be used singly or in any combination in the systems and methods for mobile agent positioning. It is intended that the specification and examples be considered as exemplary only, with a true scope and spirit of the invention being indicated by the following claims.

## Claims

1. A computerized system for solving the problem of gathering, unification, validating, updating and distribution to mobile agent of a database for use in mobile agent positioning, the system comprising:
a client mobile application configured to gather GPS data, receive 3D features and their global poses form a network service based on the GPS data, cache received data; capture camera frames and localize the device relative to an observed 3D environment; and
a server comprising a network service and a database, operative coupled to the network service, wherein the network service and the database exchange data comprising key frames, GPS data and 3D features.

2. The computerized system of claim 1, wherein the client mobile application:
gathers GPS data;
receives 3D features and their global poses form network service based on GPS data;
caches received data;
captures camera frames;
localizes the device relative to observed 3D environment;
extracts 3D features from captured frames;
matches extracted 3D features with reference 3D features;
calculates global device pose based on poses of matched features;
identifies and caches camera key frames;
compresses key frames using information on 3D feature location in frames; and
sends the compressed frames along with GPS data to the network service.

3. The computerized system of claim 1 or 2, wherein the network service:
receives compressed key frames along with GPS data from mobile clients;
uncompresses key frames;
localizes the client relative to observed 3D environment;
extracts 3D features from key frames;
classifies 3D features to geo-data types;
matches 3D features along with GPS data to geo-data (maps);
matches 3D features along with GPS data and matched geo-data to reference 3D features from the database;
updates the database of reference 3D features and meta-data with user 3D features; and
sends the 3D features from the database to mobile clients based on their current position.

4. The computerized system of any one of claims 1-3, wherein the database stores anonymized key frames along with GPS data and features along with global poses and Geo-data (map) matches.

5. The computerized system of any one of claims 1-4, wherein the client mobile application and the network service perform work sharing in which the positioning is performed completely on the client mobile application, which allows reducing the dependency of quality of service on the network latency.

6. The computerized system of any one of claims 1-5, wherein the client mobile application is further configured to extract 3D features from captured frames, matches extracted 3D features with a set of predetermined reference 3D features, calculate global device pose based on poses of matched features, identify and cache camera key frames, compress key frames using information on 3D feature location in frames and send the compressed frames along with GPS data to the network service.

7. A computer-implemented method for solving the problem of gathering, unification, validating, updating and distribution to mobile agent of a database for use in mobile agent positioning, the method comprising:
using a client mobile application configured to gather GPS data, receive 3D features and their global poses form a network service based on the GPS data, cache received data; capture camera frames and localize the device relative to an observed 3D environment; and
using a server comprising a network service and a database, operative coupled to the network service, wherein the network service and the database exchange data comprising key frames, GPS data and 3D features.

8. The computer-implemented method of claim 7, wherein the client mobile application:
gathers GPS data;
receives 3D features and their global poses form network service based on GPS data;
caches received data;
captures camera frames;
localizes the device relative to observed 3D environment;
extracts 3D features from captured frames;
matches extracted 3D features with reference 3D features;
calculates global device pose based on poses of matched features;
identifies and caches camera key frames;
compresses key frames using information on 3D feature location in frames; and
sends the compressed frames along with GPS data to the network service.

9. The computer-implemented method of claim 7 or 8, wherein the network service:
receives compressed key frames along with GPS data from mobile clients;
uncompresses key frames;
localizes the client relative to observed 3D environment;
extracts 3D features from key frames;
classifies 3D features to geo-data types;
matches 3D features along with GPS data to geo-data (maps);
matches 3D features along with GPS data and matched geo-data to reference 3D features from the database;
updates the database of reference 3D features and meta-data with user 3D features; and
sends the 3D features from the database to mobile clients based on their current position.

10. The computer-implemented method of any one of claims 7-9, wherein the database stores anonymized key frames along with GPS data and features along with global poses and Geo-data (map) matches.

11. The computer-implemented method of any one of claims 7-10, wherein the client mobile application and the network service perform work sharing in which the positioning is performed completely on the client mobile application, which allows reducing the dependency of quality of service on the network latency.

12. The computer-implemented method of any one of claims 7-11, wherein the client mobile application is further configured to extract 3D features from captured frames, matches extracted 3D features with a set of predetermined reference 3D features, calculate global device pose based on poses of matched features, identify and cache camera key frames, compress key frames using information on 3D feature location in frames and send the compressed frames along with GPS data to the network service.

13. A tangible computer-readable medium comprising a set of instructions implementing the computer-implemented method according to any one of claims 7-12 when executed on a device having processing capabilities.

14. A method of network bandwidth reduction between clients and a service comprising:
selection of the key frames which maximize difference while preserving the feature matches; and
image compression using the information on matched feature location in key frames.

## Amended claims

### Amended claims in accordance with Rule 137(2) EPC.

1. A computerized system (100) for gathering, unification, validating, updating and distribution to mobile agent of a database for use in mobile agent positioning, the system comprising:
a client mobile application (101) configured to gather GPS data (103), receive reference 3D features (104) and their global poses (102) from a network service based on the GPS data, cache received data, capture camera frames and localize the device relative to an observed 3D environment; and
a server (105) comprising a network service (106) and a database (107), operative coupled to the network service, wherein the network service and the database exchange data (108) comprising key frames, GPS data and 3D features;
wherein the client mobile application is further configured to:
extract 3D features from captured frames;
match extracted 3D features with reference 3D features;
calculate global device pose based on poses of matched features;
identify and cache key frames;
compress key frames using information on 3D feature location in frames such that those parts of images, where features have been extracted, are compressed with minimal loss; and
send the compressed key frames along with GPS data to the network service
wherein the network service is further configured to:
receive compressed data from clients,
uncompress the compressed data received,
match it with geo-map data, and
update existing 3D cloud and send the generated update to clients.

2. The computerized system of claim 1, wherein the network service is further configured to:
receive compressed key frames along with GPS data from mobile clients;
uncompress key frames;
localize the client relative to observed 3D environment;
extract 3D features from key frames;
classify 3D features to geo-data types;
match 3D features along with GPS data to geo-data (maps);
match 3D features along with GPS data and matched geo-data to reference 3D features from the database;
update the database of reference 3D features and meta-data with user 3D features; and
send the 3D features from the database to mobile clients based on their current position.

3. The computerized system of any one of claims 1-2, wherein the database is configured to store anonymized key frames along with GPS data and features along with global poses and Geo-data (map) matches.

4. The computerized system of any one of claims 1-3, wherein the client mobile application and the network service perform work sharing in which the positioning is performed completely on the client mobile application.

5. The computerized system of any one of claims 1-4, wherein the reference 3D features are a set of predetermined reference 3D features.

6. A computer-implemented method (200) for gathering, unification, validating, updating and distribution to mobile agent of a database for use in mobile agent positioning, the method comprising:
by a client mobile application configured to gather GPS data, receiving (203) reference 3D features and their global poses from a network service based on the GPS data, caching the received data, and capturing camera frames and localize the device relative to an observed 3D environment; and
exchanging using a server comprising a network service and a database, operative coupled to the network service data comprising key frames, GPS data and 3D features,
the method further comprises by the client mobile application:
extracting (207) 3D features from captured frames;
matching (208) extracted 3D features with reference 3D features;
calculating (209) global device pose based on poses of matched features;
identifying (210) and caching key frames;
compressing (211) key frames using information on 3D feature location in frames such that those parts of images, where features have been extracted, are compressed with minimal loss; and
sending (212) the compressed frames along with GPS data to the network service,
wherein the method further comprising by the network service:
receiving compressed data from clients,
uncompressing the compressed data received,
matching the data with geo-map data, and
updating existing 3D cloud and send the generated update to clients.

7. The computer-implemented method of claim 6, further comprising by the network service:
receiving (302) compressed key frames along with GPS data from mobile clients (303);
uncompressing (302) key frames;
localizing the client relative to observed 3D environment;
extracting (305) 3D features from key frames;
classifying (306) 3D features to geo-data types;
matching 3D (306) features along with GPS data to geo-data (maps);
matching 3D (308) features along with GPS data and matched geo-data to reference 3D features from the database;
updating (309) the database of reference 3D features and meta-data with user 3D features; and
sending (309) the 3D features from the database to mobile clients based on their current position.

8. The computer-implemented method of any one of claims 6-7, further comprising by the database storing anonymized key frames along with GPS data and features along with global poses and Geo-data (map) matches.

9. The computer-implemented method of any one of claims 6-8, further comprising by the client mobile application and the network service performing work sharing in which the positioning is performed completely on the client mobile application.

10. The computer-implemented method of any one of claims 6-9, wherein the reference 3D features are a set of predetermined reference 3D features

11. A tangible computer-readable medium comprising a set of instructions implementing the computer-implemented method according to any one of claims 6-10 when executed on a device having processing capabilities.
